# EUROPEAN PATENT APPLICATION

(11) **EP 1 527 957 A1**
(43) Date of publication of application: **04.05.2005**
(21) Application number: 04025398.1
(22) Date of filing: 26.10.2004
(51) Int. Cl.: B60R 19/56

(54) **Impact shock absorbing structure of a vehicle**

(30) Priority: 28.10.2003 JP 2003368062
(71) Applicant: Mitsubishi Fuso Truck and Bus Corporation, Tokyo 108-8285 (JP)
(72) Inventor: Nishiura, Yuko, 2-Chome Minato-ku Tokyo 108-8285 (JP); Kojima, Akihiro, 2-Chome Minato-ku Tokyo 108-8285 (JP); Aoyama, Kimihiko, 2-Chome Minato-ku Tokyo 108-8285 (JP)
(74) Representative: Böck, Bernhard, Dipl.-Ing.

(57) **Abstract**

The impact shock absorbing structure has a protector including a front underrun protector attached to the body frame of the vehicle by means of brackets, the structure being strong enough against the impact shock and flexible to lessen the impact shock in order to be capable of preventing the occurrence of breakage due to the impact shock. The structure is provided with a protector(12) at the front or rear end of the body frame(100) of the vehicle for receiving the impact shock when the vehicle collided with an opponent car(200), wherein the bracket(1) has a body frame attaching part(3) for attaching to the body frame(100); a protector attaching part(4) for attaching to the protector(12); and a connecting plate part(5) for connecting the body frame attaching part(3) and protector attaching part(4), the connecting plate part(5) extending in the vertical and longitudinal direction of the vehicle; and wherein the connecting plate part(5) has a cut-out part(2) opening frontward or rearward of vehicle, and the protector attaching part(4) is located in the position lower than the cut-out part(2).

## Description

### BACKGROUND OF THE INVENTION

### Field of the invention

The present invention is applied to a vehicle such as a heavy truck, etc. and relates to structure for absorbing impact shock when a passenger car, etc. collided against the vehicle at the protector supported by means of brackets attached to the front or rear end of the body frame of the vehicle.

### Description of the Related Art

A large vehicle such as a heavy truck, etc. is provided with a front underrun protector in the front of the vehicle under the front bumper and a rear bumper in the rear of the vehicle in order to prevent, when the large vehicle collides head-on with a passenger car, etc. or a passenger car, etc. collides against the large vehicle in the rear, the collided passenger car, etc. from getting into under the large vehicle by receiving the impact shock by the front underrun protector or rear bumper.

There are vehicles that adopt structure in which the front underrun protector and rear bumper are attached by means of brackets to the undersurfaces of front and rear cross-member or right and left side-rails of the vehicle.

One of such structure for absorbing impact shock in a large vehicle provided with a front underrun protector is disclosed in Japanese Laid-Open Patent Application No.2002-302000.

Schematic representation of a front underrun protector and brackets to connect the protector to the body frame of a vehicle according to said Japanese Laid-Open Patent Application No.2002-302000 is given in FIG.7 in an exploded perspective view.

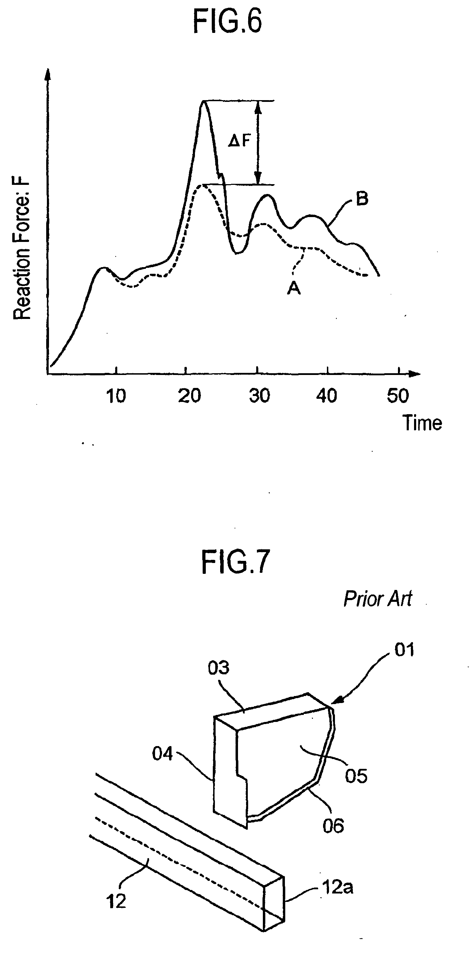

In FIG.7, reference numeral 12 is a front underrun protector, 01 is a bracket for attaching the front underrun protector 12 to a body frame(not shown in the drawing). The bracket 01 is composed of a body-side flange part 03 which is the fixing part thereof to be fixed to the body frame, a protector-side flange part 04 which is the fixing part thereof to be fixed to the rear surface 12a of the front underrun protector 12, and a connecting plate part 05 which connects the body-side flange part 03 and the protector-side flange part 04. Reference numeral 06 is a rib surrounding the connecting plate part 05 for reinforcement of the bracket.

The bracket 01 is built up by welding the connecting plate part 05 of uniform thickness to the protector-side flange part 04 and body-side flange part 03.

A large vehicle such as a heavy truck is provided with a front underrun protector to prevent a passenger car, etc. collided head-on with the large vehicle from getting into under the large vehicle.

It is desired that the impact shock absorbing structure composed of a front underrun protector, brackets, and body frame has enough strength against the impact shock that exerts on the front underrun protector when a large vehicle provided with the structure collides with the passenger car, etc., and that the structure is composed such that the impact shock of collision is lessened in order that the impact shock is not directly transmitted to the body frame by way of the front underrun protector and brackets.

However, in FIG.7, the bracket 01 having function to transmitted to the body frame the impact shock received from the front underrun protector 12 is composed such that the protector-side flange part 04 and the body-side flange part 03 are connected with the connecting plate part 05 which has a uniform thickness and desired strength, so that the bracket 01 is strong enough against the impact shock, but on the other hand, the bracket 01 is too rigid and deficient in flexibility.

For this reason, in the prior art as above described, the impact shock is transmitted from the front underrun protector 12 to the body frame by way of the bracket 01 directly without alleviated, and excessive impact shock exerts on the connecting portion of the body-side flange part to the body frame and on the clamping bolts fixing the body-side flange part to the body frame. As a result, excess stress concentration occurs in the vicinity of the connecting portion, and there is a possibility that breakage occurs in the vicinity of the connecting portion or breakage of the cramping bolts occurs.

Further, in the prior art, there is a possibility that breakage occurs in the vicinity of the connection portion of the front underrun protector 12 to the bracket 01 due to excessive restriction reaction force.

### SUMMARY OF THE INVENTION

The object of the present invention is to provide an impact shock absorbing structure which has a protector including a front underrun protector attached to the body frame of the vehicle by means of brackets, the structure being strong enough against the impact shock and flexible to lessen the impact shock in order to be capable of preventing the occurrence of breakage due to the impact shock.

To achieve the object, the present invention proposes an impact shock absorbing structure of a vehicle provided with a protector at the front or rear end of the body frame of the vehicle for receiving the impact shock when the vehicle collided with an opponent car, wherein said bracket has a body frame attaching part for attaching to said body frame; a protector attaching part for attaching to said protector; and a connecting plate part for connecting said body frame attaching part and protector attaching part, the connecting plate part extending in the vertical and longitudinal direction of the vehicle; and wherein said connecting plate part has a cut-out part opening frontward or rearward of vehicle, and said protector attaching part is located in the position lower than said cut-out part.

According to the present invention, as the bracket to connect the protector to the body frame is configured such that the connecting plate part extending on the vertical and longitudinal direction of the vehicle for connecting the body attaching part and protector attaching part thereof has a cut-out part opening outward, that is, frontward or rearward according to whether the protector is attached at the front or rear of the vehicle, the bracket is improved in the easiness to be deformed by the force from the protector, i.e. flexibility is increased, and the impact shock, particularly the excessively large impact shock at an early stage of collision from the front underrun protector is absorbed.

With this construction, the impact shock transmitted via the brackets to the body frame and the stress concentration in the vicinity of the connecting portion of the bracket to the body frame is alleviated, as a result an impact shock absorbing structure having enough strength and proper flexibility, due to which concentration of stress is relaxed in the vicinity of said connecting portion, can be obtained.

Further, as the easiness of deformation of the bracket by external force, i.e. the flexibility of the bracket is increased by forming the cut-out part, the reaction force in the vicinity of the connecting plate part induced by the impact shock from the front underrun protector is decreased, as a result the front underrun protector is prevented from breaking because excessively large reaction force does not exert thereon.

It is preferable that said connection plate part is configured such that the thickness thereof is thicker in the near side to said body attaching part than that in the near side to the protector attaching part.

By forming the connecting plate part to be thinner in the near side to the protector attaching part and bordering on the cut-out part than in the near side to the body attaching part, the flexibility of the thinner part is increased by the synergy effect of the thinner part and cut-out part, as a result the maximum of the impact shock from the front underrun protector 12 is decreased and a large part of the impact shock can be absorbed by the thinner part.

It is preferable that said connecting plate part has a reinforcement rib along the periphery thereof.

By configuring the connecting plate part of the bracket in this way, the connecting plate part has proper flexibility while securing enough strength against the load in the longitudinal direction, and its strength against torsional load is also secured by the reinforcement rib along the periphery thereof.

In the invention, said cut-out part is preferable to be concretively formed as follows:
(1) Said cut-out part is formed such that the width in the vertical direction of the vehicle reduces continuously in the direction of depth so that the width is maximum at the opening part and minimum at the bottom part thereof.
   By configuring like this, as the width of the cut-out part is formed to reduce continuously in the direction of the dept thereof, the force exerting on the protector attaching part and transmitted to the body attaching part along the cut-out part becomes uniform, and the occurrence of stress concentration induced by the presence of the cut-out part can be prevented.
(2) Said cut-out part is formed to have a general shape of a letter "U" turned over sideways with the width in the vertical direction being nearly uniform when viewed in the direction of width of the vehicle.
   By forming the cut-out part like this, the area of the cut-out part in the connection plate part becomes larger, the flexibility of the connecting plate part is increased in the vicinity of the cut-out part and a large part of the impact shock from the protector can be absorbed by the flexible part between the cut-out part of the connecting plate part and the protector.
(3) Said cut-out part is formed such that a notched part is formed on the lower face of the cut-out part nearer to the protector attaching part for furthering the deformation of the connecting plate part by the impact shock.

By forming the lower face of the cut-out part like this, the flexibility of the connecting plate part is increased in the vicinity of the notched part and a large part of the impact shock from the protector can be absorbed better by the increased flexibility near the notched part of the connecting plate part.

### BRIEF DESCRIPTION OF THE DRAWINGS

Other features and advantages of the invention will become apparent from the following detailed description and accompanying drawings, wherein:
FIG.1 is a perspective view of the substantial part of the embodiment of the impact shock absorbing structure of a heavy truck according to the present invention;
FIG.2 is a first example of the bracket in the embodiment, in which FIG.2(A) is a schematic representation showing the bracket and front underrun protector in a partial exploded perspective view, and FIG.2(B) is a view in the direction of arrow Z in FIG.2(A);
FIG.3 is a second example of the bracket in the embodiment, in which FIG.3(A) is a schematic representation showing the bracket and front underrun protector in a partial exploded perspective view, FIG.3(B) is a view in the direction of arrow Y in FIG.3(A), and FIG.3(C) is a section along line X-X in FIG.3(A);
FIG.4 is a third example of the bracket in the embodiment, in which FIG.4(A) is a schematic representation showing the bracket and front underrun protector in a partial exploded perspective view, and FIG.4(B) is a view in the direction of arrow R in FIG.3(A);
FIG.5 is a perspective view showing the situation when a heavy truck provided with the impact shock absorbing structure according to the present invention collided against a passenger car;
FIG.6 is a graph showing the effect of the present invention; and
FIG.7 is a schematic representation showing the bracket and front underrun protector of a prior art in a partial exploded perspective view.

### DETAILED DESCRIPTION OF THE PREFERRED EMBODIMENTS

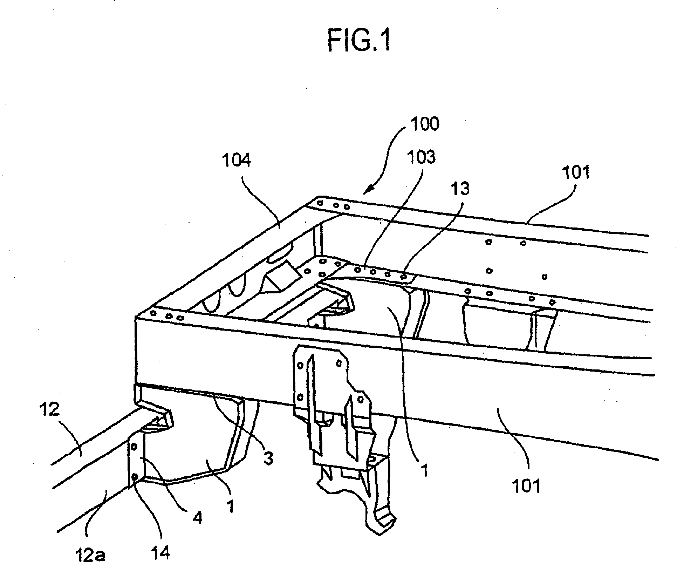

The present invention will now be detailed with reference to FIG.1 - 6 showing preferred embodiments. It is intended, however, that unless particularly specified, dimensions, materials, relative positions and so forth of the constituent parts in the embodiments shall be interpreted as illustrative only not as limitative of the scope of the present invention.

In FIG.1 showing an embodiment of the impact shock absorbing structure according to the present invention, reference numeral 100 is a body frame of a heavy truck, 101 is a pair of side rails extending in the longitudinal direction of the vehicle body, 104 is a cross member connecting said side rails at the front ends thereof, and 103 is a stiffener attached to one of the side rails(the same of the other side rail being not seen in the drawing).

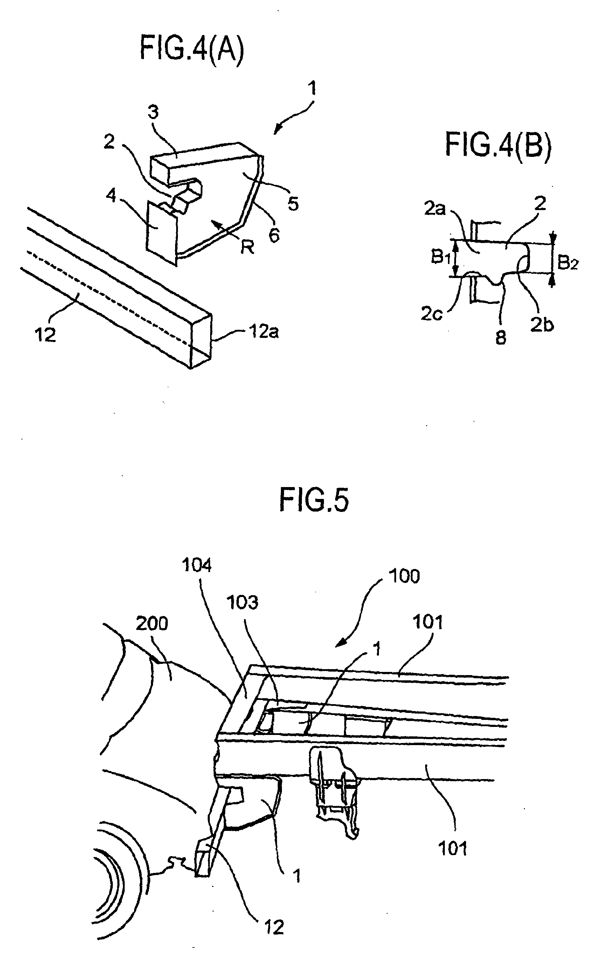

Reference 12 is a front underrun protector which receives impact shock from a passenger car 200(see FIG.5) when the heavy tuck collides against the passenger car 200, 1 is one of a pair of brackets for attaching said front underrun protector 12 to both end parts of said cross member 104 or to the front end parts of said side rails.

Each of said brackets 1 is fixed to the side end part of the cross member 104 by its body frame attaching part 3 extending horizontally (hereafter referred to as a body-side flange part) together with the stiffener 103 by means of a plurality of bolts 13 and also fixed to the rear face 12a of the front underrun protector 12 by its protector attaching part 4 extending vertically(hereafter referred to as a protector- side flange parts) by means of a plurality of bolts 14.

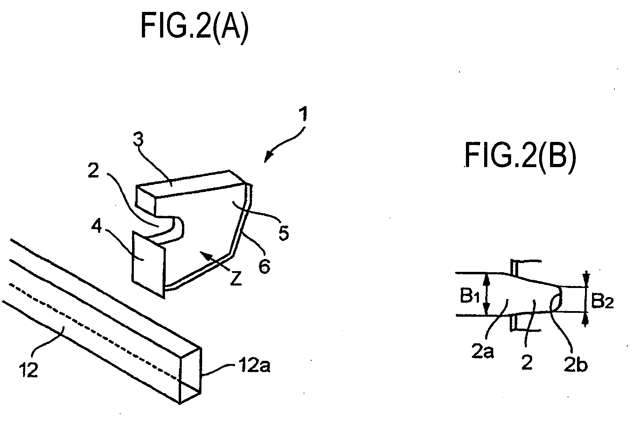

In FIG.2 showing the first example of said bracket 1, the bracket 1 is configured to have a body-side flange part 3 for fixing the bracket to the end part of the cross member 104, a protector-side flange part 4 for fixing the bracket to the rear face 12a of the front underrun protector 12, and a connecting plate part 5 connecting said body-side flange part 3 and said protector-side flange part 4, the connecting plate part 5 extending in the vertical and longitudinal direction of the vehicle body and being uniform in thickness.

Reference numeral 6 is a reinforcement rib running along the periphery of the connecting plate part 5.

Said bracket 1 is composed by fixing the connecting plate part 5 to the protector-side flange part 4 and body-side flange part 3 by for example fillet welding.

The bracket 1 may be composed such that the back face of each of press-formed sheet metal is connected for example by spot welding. In this case, the process of fillet welding is unnecessary, so it is advantageous for mass production resulting in reduced production cost.

Reference numeral 2 is a cut-out part formed in the connecting plate part 5 to be opening frontward of vehicle, and as shown in FIG.2(B), the vertical width of the cut-out part 2 is reduced continuously in the direction of its depth such that the width is maximum at the front end 2a thereof as indicated by B₁ and minimum at the bottom 2b thereof as indicated by B₂.

As the width of the cut-out part 2 is reduced continuously in the direction its depth, the force exerting on the protector-side flange part 4 and transmitted to the body-side flange part 3 along the cut-out part 2 becomes uniform, and the occurrence of stress concentration resulting due to the formation of the cut-out part 2 can be prevented.

As the reinforcement rib 6 is provided around the connecting plate part 5, the connecting plate part 5 has a proper flexibility capable of lessening the impact shock by virtue of the cut-out part 2 while keeping enough strength against the impact force exerting in the longitudinal direction of the vehicle, and the strength against torsion is reinforced by the reinforcement rib 6.

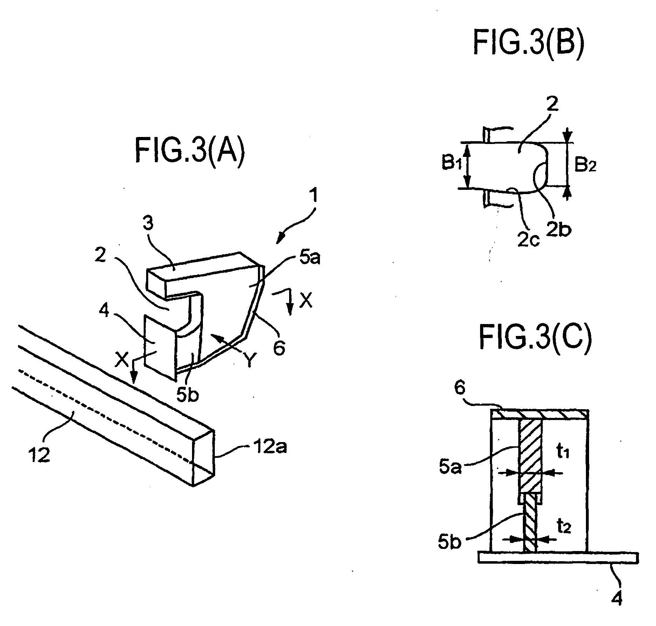

In FIG.3 showing the second example of said bracket 1, the cut-out part 2 is formed to have a general shape of a letter "U" turned over sideways with the width in the vertical direction being nearly uniform in the depth direction when viewed in the direction of arrow Y, that is, width B1 and B2 are nearly the same in the direction of depth.

By forming the cut-out part 2 like this, the area of the cut-out part 2 in the connection plate part 5 becomes larger, the deformation along the periphery of the cut-out part 2 of the connecting plate part 5 by the impact shock is furthered and a large part of the impact shock from the front underrun protector 12 can be absorbed between the cut-out part 2 of the connecting plate part 5 and the protector-side flange part 4.

Further, by forming the lower face 2c of the cut-out part 2 to be a smoothly running circular arc surface, the occurrence of stress concentration when the impact shock exerted can be prevented.

In the second example, the connection plate part 5 is formed such that the thickness t₁ is thicker in the part 5a rearward and upward toward the body-side flange part 3 than the thickness t₂ in the part 5b in the near side to the protector-side flange part 4.

By forming the connection plate part 5 like this, the thickness t₂ of the part near to the protector-side flange part 4 and bordering on the cut-out part 2 of the connecting part 5 is thinner than the thickness t₁ of the part near to the body-side flange part 3, so that the flexibility of the thinner part is increased by the synergy effect of the thinner part and cut-out part, as a result the maximum of the impact shock from the front underrun protector 12 is decreased and a large part of the impact shock can be absorbed by the thinner part.

In the second example, the connecting plate part 5 may be such that the thickness is reduced in the part extending downward from the lower face of the cut-out part 2 with the other part thereof being uniform in thickness as shown in FIG.3(A)

The configuration of the second example of the bracket other than that mentioned above is the same as that of the first example shown in FIG.2, and the same component part is denoted by the same reference numeral.

In FIG.4 showing the third example of said bracket 1, a notched part 8 is formed on the lower face 2c of the cut-out part 2 nearer to the protector-side flange part □ in order to further the deformation of the connecting plate part 5 by the impact shock.

With this configuration, the deformation is furthered in the vicinity of the notched part 8 on the lower face 2c of the cut-out part 2 of the connection plate part 5, the maximum of the impact shock is further decreased and a large part of the impact shock can be absorbed in the vicinity of the notched part 8 of the connecting plate part 5.

The configuration of the second example of the bracket other than that mentioned above is the same as that of the first example shown in FIG.2, and the same component part is denoted by the same reference numeral.

According to the examples as above described, the bracket 1 for connecting the front underrun protector 12 to the body frame 100 is configured such that a cut-out part 2 opening frontward of vehicle is formed in the connecting plate part 5 which connects the body-side flange part 3 and the protector-side flange part 4, so that the bracket 1 is improved in easiness to be deformed, that is, the bracket 1 becomes more flexible against the force from the front underrun protector 12 by the presence of the cut-out part 2. Therefore, the impact shock, particularly the excessively large impact shock at an early stage of collision from the front underrun protector 12 due to the frontal crash with a passenger car 200 as shown in FIG.5 is absorbed by the bracket. In other words, desired flexibility can be obtained by determining the shape and size of the cut-out part 2 properly.

FIG.6 represents the result of an experiment, in which the reaction force of the impact shock from the front underrun protector 12 in the case of the second example of the bracket 1 as shown in FIG.3 is represented by curve A, and that in the case of the bracket of prior art is represented by curve B. As can be recognized from the graph, the reaction force A in the case of the present invention is reduced by Δ F from the reaction force B in the case of the prior art, which is a reduction of about 32%.

According to the present invention, an impact shock absorbing structure is provided, which has a desired strength and proper flexibility, with which the impact shock transmitted to the body frame 100 by way of the bracket 1 and the stress concentration in the vicinity of connection part of the bracket 1 to the body frame 100 can be alleviated and the occurrence of breakage near the vicinity of the connection plate part 5 can be prevented.

Further, as the easiness of deformation of the bracket 1 by external force, i.e. the flexibility of the bracket 1 is increased by forming the cut-out part 2, the reaction force in the vicinity of the connecting plate part 5 induced by the impact shock from the front underrun protector 12 is decreased, as a result the front underrun protector 12 is prevented from breaking because excessively large reaction force does not exert thereon.

Also, as the body-side flange part 3, body frame 100, and stiffener 103 are clamped together, the rigidity of the clamped part is increased and deformation by the impact shock is decreased, as a result the force exerting on the bolts is dispersed among the plurality of the bolts 13 and the bolts are prevented from breakage because excessively large load does not exert thereon.

In the forgoing, although explanation has been done on the front underrun protector attached to the front part of the side rails, the present invention can be applied to the bracket to support a front bumper, rear bumper, etc. for preventing a collided car from getting under the large vehicle.

## Claims

1. An impact shock absorbing structure of a vehicle provided
with a protector at the front or rear end of the body frame of the vehicle for receiving the impact shock when the vehicle collided with an opponent car, wherein
said bracket has a body frame attaching part for attaching to said body frame;
a protector attaching part for attaching to said protector; and
a connecting plate part for connecting said body frame attaching part and protector attaching part, the connecting plate part extending in the vertical and longitudinal direction of the vehicle; and wherein
said connecting plate part has a cut-out part opening frontward or rearward of vehicle, and
said protector attaching part is located in the position lower than said cut-out part.

2. The impact shock absorbing structure according to claim 1, wherein said connection plate part is configured such that the thickness thereof is thicker in the near side to said body attaching part than that in the near side to the protector attaching part.

3. The impact shock absorbing structure according to claim 1, wherein said connecting plate part has a reinforcement rib along the periphery thereof.

4. The impact shock absorbing structure according to claim 1, wherein said cut-out part is formed such that the width in the vertical direction of the vehicle changes continuously in the direction of depth so that the width is maximum at the opening part and minimum at the bottom part thereof.

5. The impact shock absorbing structure according to claim 1, wherein said cut-out part is formed to have a general shape of a letter "U" turned over sideways with the width in the vertical direction being nearly uniform when viewed in the direction of width of the vehicle.

6. The impact shock absorbing structure according to claim 1, wherein said cut-out part is formed such that a notched part is formed on the lower face of the cut-out part nearer to the protector attaching part for furthering the deformation of the connecting plate part by the impact shock.
